# EUROPEAN PATENT SPECIFICATION

(11) **EP 2 855 064 B1**
(45) Date of publication and mention of the grant of the patent: **23.11.2016**
(21) Application number: 13740387.9
(22) Date of filing: 29.05.2013
(51) Int. Cl.: B23K 26/60

(54) **METHOD OF APPLYING A PROTECTIVE CLADDING, PARTICULARLY TO GAS-TIGHT MEMBRANES OF ENERGY BOILERS**
VERFAHREN ZUM AUFBRINGEN EINER SCHUTZSCHICHT, INSBESONDERE AUF GASDICHTEN MEMBRANEN VON ENERGIEKESSELN
PROCÉDÉ D'APPLICATION D'UNE GAINE DE PROTECTION, EN PARTICULIER SUR DES MEMBRANES ÉTANCHES AUX GAZ DE CHAUDIÈRES À ÉNERGIE

(30) Priority: 30.05.2012 PL 39937812
(43) Date of publication of application: 08.04.2015
(73) Proprietor: Plasma System S.A., 41-103 Siemianowice Slaskie (PL)
(72) Inventor: BOREK, Aleksander, PL-40-833 Katowice (PL); KLIMPEL, Andrzej, PL-44-100 Gliwice (PL)
(74) Representative: Klassek, Maciej Adam
(86) International application number: PCT/PL2013/000070
(87) International publication number: WO 2013/180588

(56) References cited:
- CA-A1- 2 106 425
- US-A1- 2007 181 643
- US-B1- 6 495 268

## Description

The present invention refers to a method of applying a protective cladding to gas-tight membranes of energy boilers.

US2007/181643A1, on which the preamble of claim 1 is based on, discloses such a method.

Environmental regulations, especially in the context of NOx emissions reduction, make it necessary to use new methods of coal combustion in pulverized fuel boilers. Low-emission combustion, injection of ammonia into a combustion chamber, addition of biomass for combustion lead to strong corrosion of evaporator walls (membrane). An alternative is to use expensive off-gas catalysts. It is possible to protect membranes against corrosion by application of anti-corrosion protective coatings or by use of air shrouds.

There is known from Polish patent description, PL 200773, a method of applying an anti-corrosion coating to heating walls of combustion chambers, which consists in blast cleaning of the substrate up to cleanliness Sa 3 and roughness Rz from 35 µm to 100 µm, wherein in the second phase pulverized aluminum is plasma sprayed, and in the third phase the surface layer of the coating is reinforced thermally until Al₂O₃ is obtained.

Use of an air shroud does not fully separate membranes from the aggressive atmosphere inside a combustion chamber; furthermore, this solution is expensive and its maintenance is costly. It is also difficult to control the flow rate of air used as a shroud, and to control the air intake for the combustion process at the same time. Significant amount of heat introduced via a conventional welding process (TIG, MIG/MAG or submerged arc welding) results in significant tension and deformation to membranes in the process of cladding application, and a cladding layer has a thickness of much above 1 mm which results in the consumption of a significant amount of an expensive material.

A method according to the invention is to eliminate drawbacks of the known solutions, and in this way make it possible to achieve a thin gas-tight protective cladding attached permanently (metallurgically) to the substrate, characterized by a very long useful life, especially in the conditions of low-oxygen corrosion.

A method according to the invention involves coupling of two gas-tight membranes together, and then soaking a pair of gas-tight membranes coupled together at 300°C to 800°C, favorably at around 700°C; afterwards, the membrane surface where a cladding is to be applied is cleaned, mounted on a positioner and then preheated up to 80°C to 600°C, favorably to around 300°C-450°C, and then the cleaned and preheated surface of a pair of gas-tight membranes coupled together is covered with a protective cladding, wherein a protective cladding is applied at a thickness of 0.1 mm to 3.00 mm, favorably around 0.6 mm, and then the entire pair of gas-tight membranes coupled together with a cladding is finally soaked at 300°C to 800°C, favorably at around 700°C, and the set temperature is maintained for 10 minutes to 600 minutes, favorably for 15 minutes to 30 minutes, and then, gas-tight membranes with a cladding are uncoupled.

Gas-tight membranes are joined by welding metal sections onto their edges and/or flanges.

Surface of a gas-tight membrane is cleaned by laser ablation, with a laser beam having an exit power from 100 kW to 600 kW, favorably 300 kW, a spot diameter from 0.1 mm to 1.0 mm, favorably around 0.5 mm and a scanning width of 30 mm to 80 mm, favorably around 60 mm, a laser pulse frequency of 10000 per second to 50000 per second, favorably around 20000 pulses per second.

Preliminary soaking is performed by insertion of heaters in between flanges and pipes of a gas-tight membrane.

Preliminary soaking is performed by insertion of heaters in between flanges and pipes of a gas-tight membrane and/or into membrane pipes.

For cladding of a gas-tight membrane, a material in the form of powder or wire is used, having the following composition: nickel from 50% to 80%, favorably around 66%, chromium from 8.0% to 50.0%, favorably around 20.0%, boron from 0.1% to 5.0%, favorably around 0.85%, silicon from 0.08% to 6.0%, favorably around 1.2%, manganese from 0.05% to 1.8%, favorably around 0.15%, molybdenum from 2.0% to 12.0%, favorably around 6.8%, niobium from 1.2% to 4.0%, favorably around 2.7%, iron from 0.01% to 4.0%, favorably around 1.8%, carbon from 0.03% to 0.9%, favorably around 0.25%.

For cladding of a gas-tight membrane a material in the form of powder or wire is used, having the following composition: nickel from 50% to 80%, favorably around 64.0%, chromium from 8.0% to 50.0%, favorably around 22.0%, silicon from 0.08% to 1.0%, favorably around 0.25%, manganese from 0.05% to 2.0%, favorably around 0.20%, molybdenum from 2.0% to 15.0%, favorably around 9.0%, niobium from 2.0% to 5.0%, favorably around 3.6%, carbon from 0.01% to 0.5%, favorably around 0.03%, iron favorably below 1.0%.

For cladding of a gas-tight membrane, a material in the form of powder or wire is used, having the following composition: nickel from 60.0% to 80.0%, favorably around 70.4%, chromium from 8.0% to 20.0%, favorably around 17.3%, silicon from 2.0% to 7.0%, favorably around 4.0%, boron from 2.0% to 6.0%, favorably around 3.43%, carbon from 0.4% to 2.0%, favorably around 0.89%, iron from 2.5% to 7.0%, favorably around 4.0%.

For application of a protective cladding to a gas-tight membrane laser beam radiation energy is used.

Cold Metal Transfer (CMT) technology is used for application of a protective cladding to a gas-tight membrane.

In the process of cladding application, source power (laser, CMT) is controlled by a pyrometer or an infrared camera in such a way that a temperature of a cladding layer never exceeds 2600°C, and favorably is 2300°C to 2500°C.

Protective cladding parameters are controlled in such a way that the process running area is supplied with energy of 2.5-12 kJ/g of feedstock, favorably 4-6 kJ/g.

The amount of energy fed to the cladding area is determined so as to have heat penetration to a substrate in the cladding area below 2.00 mm, and favorably below 0.2 mm.

Cladding is applied to a pair of gas-tight membranes coupled together, mounted on a positioner in such a way that after one or more beads are applied to one side of a pair of gas-tight membranes coupled together, this pair is turned and one or more beads are applied to another side of a pair of gas-tight membranes, wherein the cycle is repeated until the entire protective layer is applied as planned.

One cycle comprises application of at least one bead over a length no lower than 0.4 of a gas tight membrane's length to one side of a pair of gas-tight membranes coupled together; favorably a cladding is applied to 5%-10% of the planned surface. Protective cladding is applied simultaneously to opposite sides of a pair of gas-tight membranes coupled together.

Protective cladding is applied in a weave patter using CMT technique characterized by the following parameters: frequency of 1 Hz to 3 Hz, favorably 2 Hz, amount of cladding applied from 3.0 kg per hour to 6.0 kg per hour, favorably 4.3 kg per hour, weave amplitude from 10 mm to 12 mm.

For connection of gas tight membrane flanges by metal sections, continuous or stitch welding is used.

A coupled pair of gas-tight membranes is preheated before cladding application and/or in the process of cladding application up to a temperature of 80°C to 600°C, favorably 300°C to 450°C.

Adjacent pipe ends of gas-tight membranes are welded together.

Gas-tight membranes are coupled with bolts and/or sections located along membrane edges.

Surface of a gas-tight membrane is blast cleaned up to a cleanliness level of Sa3, using corundum and/or shot of a fraction from 0.5 mm to 2.0 mm, favorably around 0.7 mm, and applying gas pressure from 2.5 bar to 12.0 bar, favorably around 7.0 bar.

A fixed distance between a cladding head and a coupled pair of membranes is maintained by a laser tracing system.

One end of a positioner can move freely along the longitudinal axis of a membrane.

A method according to the invention makes it possible to apply a permanent gas-tight cladding to a gas-tight membrane composed of several pipes and beams welded together, by applying a cladding of material resistant to aggressive environment inside a combustion chamber of a boiler fired by waste or coal or coal mixed with biomass or another bioorganic substance.

Composition of a protective cladding guarantees resistance to low-oxygen (high temperature) corrosion caused by sulfur and chlorine compounds, and to ammonia-based corrosion.

This protection is offered by nickel and chromium based mixtures. Iron content should be minimized.

Due to the application of solutions such as a "cold vortex", a protective cladding should be more erosion-resistant than boiler steel.

To improve erosion-resistance properties, nickel and chromium based material can be enriched with manganese, molybdenum, niobium and silicon, and boron, the presence of which improves fusibility of the mixture, and makes a cladding layer harder.

Application of a metallic protective cladding which is permanently attached to a steel substrate is commonly used in industry, with the use of conventional welding technologies such as TIG,MIG/MAG, submerged arc.

Application of traditional welding technologies requires introduction of significant heat amounts, which result in significant heat penetration layer in a substrate, making significant heat amount permeate an element, which leads to increased stresses, and eventually significant deformation of an element.

Traditional cladding processes do not make it possible to obtain thin protective layers of 0.2 mm - 1 mm.

When beams and pipes are welded into gas-tight membranes, thermal stress is generated inside an element.

Cladding processes do also lead to thermal stress on the surface of an element, which makes it bend to the "inside" towards the cladding.

Preheating of an element removes stresses generated in the process of a gas-tight membrane welding.

Coupling of 2 membranes with each other makes cladding stresses on both sides of such membranes coupled together set off, which eliminates a deformation of a coupled pair of membranes.

While placing an element on a positioner having a horizontal axis, cladding can be applied alternately. In a method according to the invention, several beads are applied to one side of a pair of membranes coupled together, then this pair is turned, and cladding is applied to another side. The cycle is repeated multiple times so that stresses generated on one side are shortly compensated by cladding on another side. Vertical positioning of membranes when using two devices makes it possible to apply a cladding layer to both sides at the same time and to compensate thermal stresses on an ongoing basis, and to maintain the shape.

A protective cladding must be resistant to chemical impact from the atmosphere inside a boiler, it should be entirely gas-tight and permanently attached to the substrate, any possible pores should be closed. These conditions, contrary to thermally sprayed coatings, can be fulfilled by claddings.

Traditional cladding techniques, TIG, MIG/MAG, submerged arc technique introduce significant amounts of heat into an element leading to local temperatures of 2800°C, which leads to large stresses causing deformations, and a deep heat penetration zone of over 1 mm. These processes are difficult to be precisely controlled and do not make it possible to obtain thin layers of 0.3 mm - 0.7 mm which would reduce the consumption of expensive material and minimize introduction of significant heat amounts into an element.

Application of laser cladding technologies combined with temperature control systems and laser power control on the basis of cladding temperature makes it possible to precisely control cladding temperature in the process of its application and to maintain this temperature below a boiling point of main feedstock ingredients, which facilitates process stability and makes it possible to obtain a high quality cladding.

Correspondingly, the use of Cold Metal Transfer (CMT) technology for cladding application minimizes the volume of heat introduced into an element, resultant stresses and heat penetration zone.

Element preheating before and during the cladding application process, up to several hundred degrees, makes it possible to reduce the cooling rate of a cladding which as a consequence prevents cracks and integrity losses in a cladding.

Excessive cooling rate of a cladding and cracking thereof are prevented also by the use of cladding in a weave pattern while using CMT technology.

Continuous preheating of an element while cladding application results in favorable reduction of stresses therein.

To eliminate residual stresses after a cladding process, a pair of membranes coupled together is soaked at a temperature of several hundred degrees, favorably around 700°C for several dozen minutes.

Initial deformation of membranes in the direction opposite to the stresses generated during cladding application makes residual stresses remaining after relief soaking process compensate with elastic stresses caused by membrane deformation, which leads to membrane unbending.

Thanks to initial deformation of a membrane, its possible unbending after cladding process propagates in such a direction that while unbending a protective cladding is not stretched which eliminates a risk of crack formation.

Use of a laser tracing system mounted on a robot arm makes it possible to keep a constant distance from a membrane in case a pair of membranes coupled together has been initially deformed by spacers before cladding application, which facilitates the programming of the entire process.

To compensate for length changes due to temperature fluctuations while preheating before and cladding application to a coupled pair of membranes, one end of a positioner can move freely move freely along the longitudinal axis of pipes.

An advantage of a method according to the invention is that membrane deformations are minimized thanks to coupling the membranes together and relieving stress by soaking, which reduces stresses leading then to deformations of pipes, flanges and welded joints while laser cladding application; an advantage of a method is also a possibility to have a cladding fully tight as it is metallurgically bonded with a substrate layer.

An advantage of a method according to the invention is the use of a thermal stress compensation phenomenon, which is obtained thanks to membrane coupling. Soaking and preheating before cladding application removes gases trapped in the surface structure of a membrane.

Initial deformation of gas-tight membranes reduces a risk of cracks on a protective cladding after membranes are uncoupled.

Initial deformation minimizes a requirement to unbend membranes after uncoupling. Final soaking after cladding application eliminates stresses and minimizes deformations of membranes after their uncoupling.

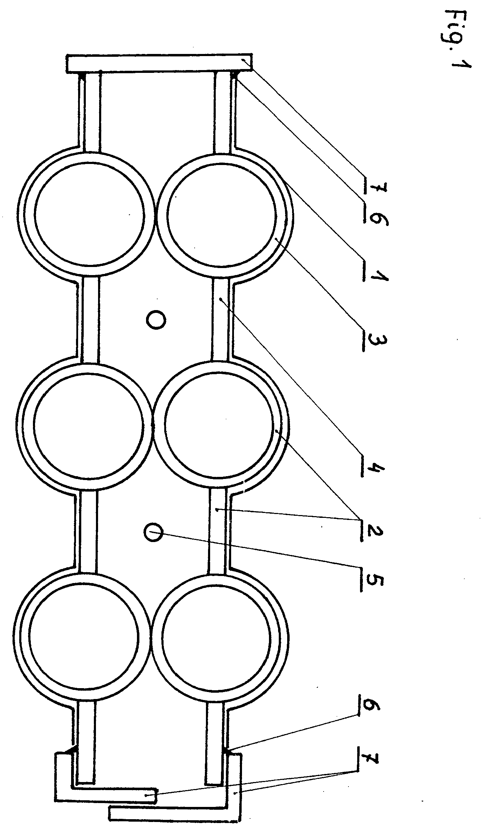

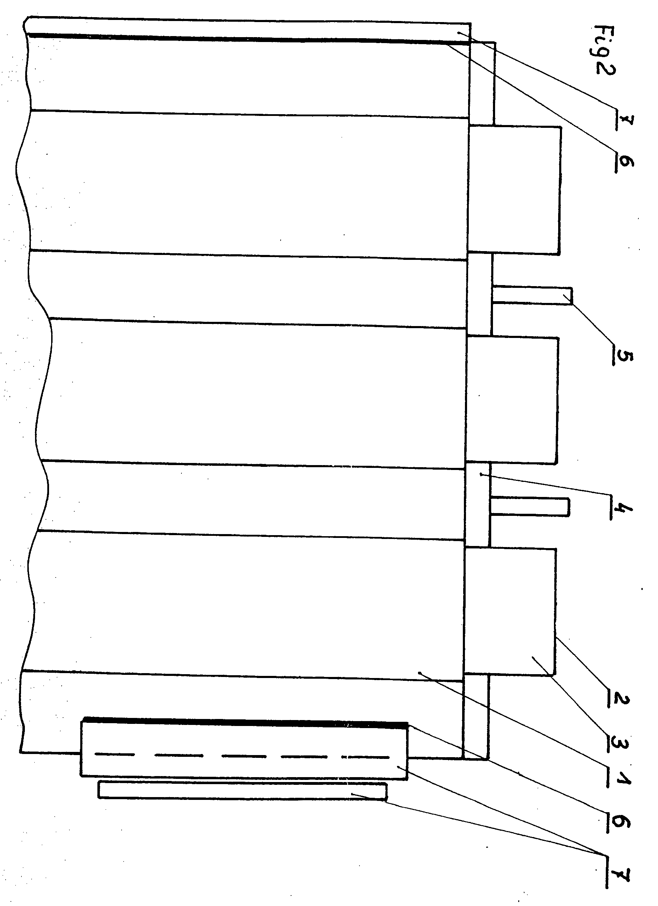

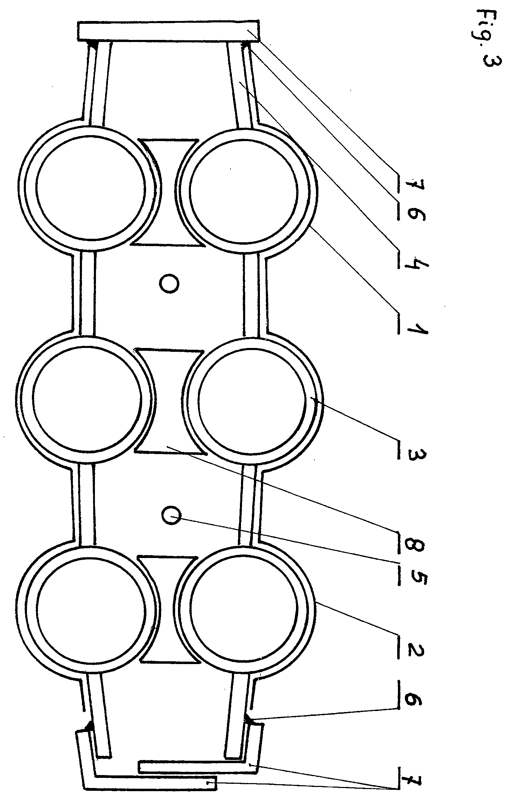

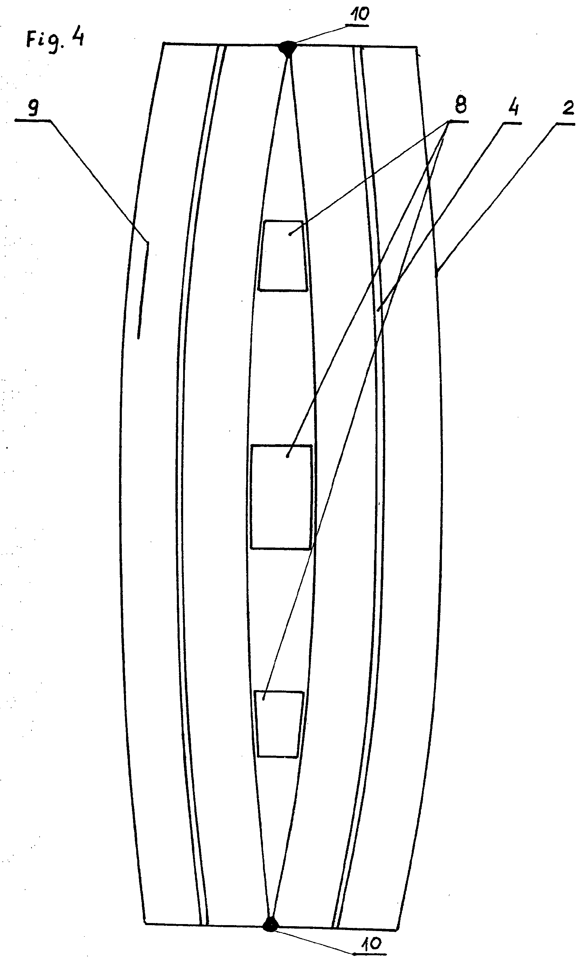

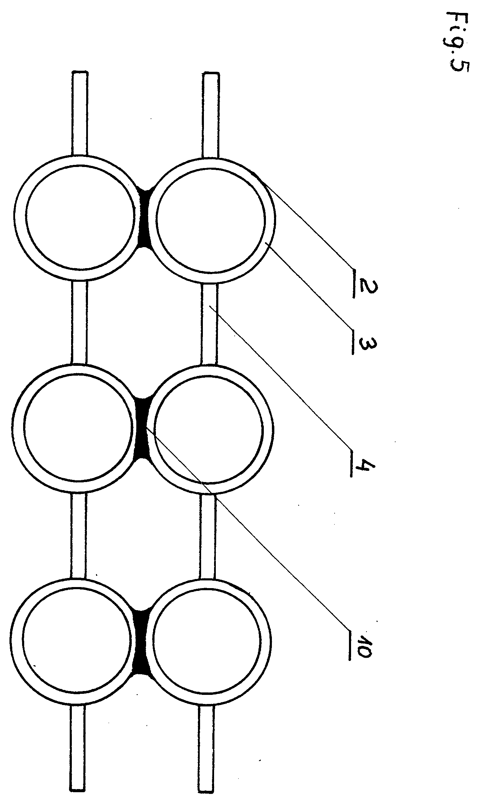

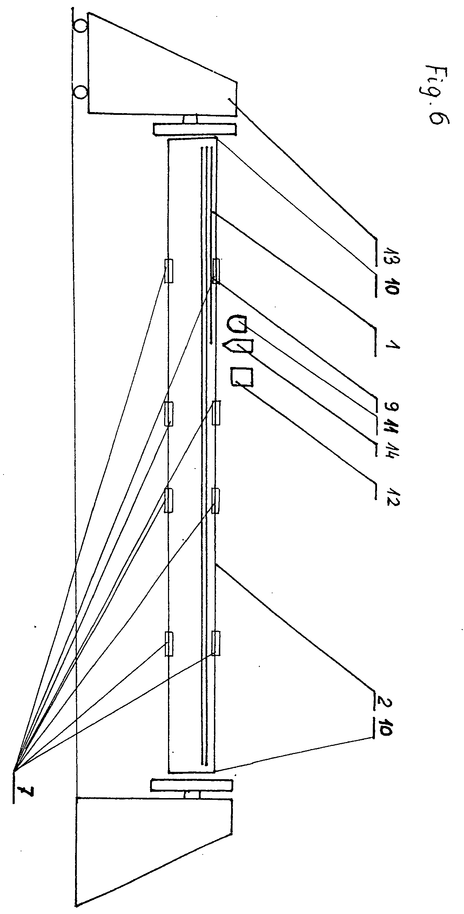

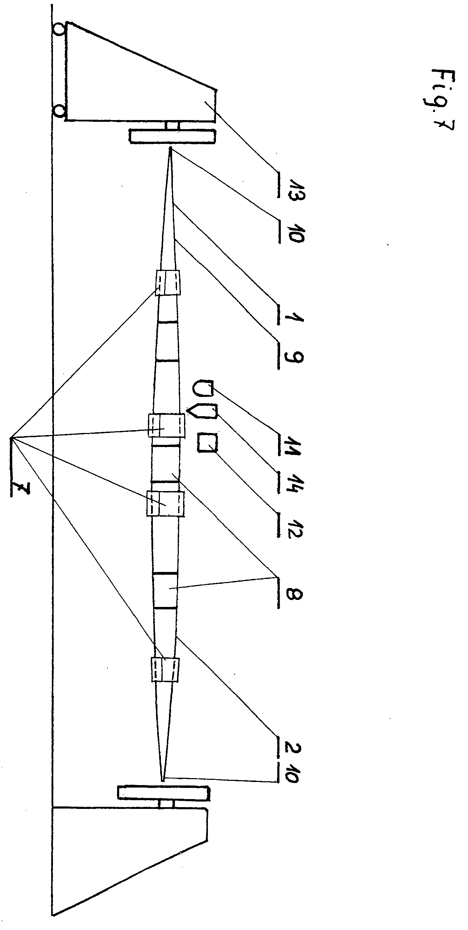

The present invention is shown as an embodiment in a drawing where fig. 1 shows a view of a pair of gas-tight membranes coupled together from the side of pipes inlet with heaters inserted in between pipes and flanges, fig. 2 shows a top view of a pair of gas-tight membranes coupled together, fig. 3 shows a view of a pair of gas-tight membranes coupled together from the side of pipes inlet after insertion of distance spacers, fig. 4 shows a side view of a pair of gas-tight membranes coupled together after insertion of distance spacers, fig. 5 shows a view of a pair of gas-tight membranes coupled together connected by weld joints, shown from the side of pipes, fig.6 shows a view of a pair of gas-tight membranes coupled together in a vertical position as mounted on a positioner, and fig. 7 shows a view of a pair of gas-tight membranes coupled together in a horizontal position as mounted on a positioner. One embodiment of the invention is a process of applying a protective cladding (1) to a surface of a pair of gas-tight membranes (2) coupled together, around 6 m long, 425 mm wide and composed of five pipes (3) of a diameter of around 61 mm joined by flanges (4) around 20 mm wide, and ending with flanges, around 20 mm wide.

Two gas-tight membranes (2) having the same dimensions were coupled together in such a way that angle (7) sections were fastened by a weld (6) to their edge flanges, said angles provided with slits; afterwards, one membrane was laid horizontally, and spacers (8) having different thicknesses and shape corresponding to the shape of pipes (3) were put onto it in such a way that the thickest spacer, 20 mm thick, was put in the center of the middle pipe, and that thinner spacers were laid in the direction of a membrane edge. After such preparation of one membrane, another one was laid onto it; membrane edges over entire circumference were drawn to each other by a vice. Contacting pipes at membrane edges were joined together by a weld (10), and bolts were put inside angle slits and tightened so that a pair of membranes coupled together became slightly convex. A pair of membranes coupled together was soaked in an oven for 20 minutes at a temperature of 700°C, wherein both sides were shot blasted up to Sa3 level, using corundum of a grain size 0.5 mm to 0.8 mm at an air pressure of around 7.0 bar. Then, a pair of gas tight membranes (2) coupled together was mounted on a horizontal positioner (13) making it possible to turn the gas-tight membranes coupled together around the longitudinal axis of this pair, where both sides of the positioner were provided with 8 m long travel ways, where two robots were moving. Positioner's (13) design makes it possible to compensate changing lengths of a pair of gas tight membranes (2) resulting from changeable temperatures during preheating and applying a protective cladding (1) with a laser. Robots are provided with heads (14) for application of a cladding by a laser; these heads are connected with infrared cameras (11) and laser tracing systems (12) making it possible to keep a constant distance from membrane surface. Heads are connected to optic fiber from lasers, 4 kW each. Infrared cameras (11) control laser power via software. In between flanges (4) and pipes (3) of membranes there are 4 electric heaters (5), 6 m long, which are connected to power supply units. For 2.5 hours of membranes heating in a horizontal position, they reached a temperature of 300°C. After the set temperature was achieved, cladding application process started, with feedstock chemistry corresponding to the chemistry of Inconel 625 commercial product; powder was fed at a rate of 30 g/min with laser power of 2.8 kW to 3.2 kW, at a linear speed of a head of 3600 mm/min. Single bead width (9) - 4 mm, cladding height 0.5 mm - 0.7 mm, bead lap ca. 2.0 mm. Distance from a head tip to the substrate - 13 mm.

Inert gas flow rate 4-6 l/min, shroud gas (argon) flow rate 9 l/m. After application of cladding to 2 middle flanges and adjacent welds, the positioner turned a pair of membranes coupled together by 180 degrees and the process was repeated on another side. The cycle was repeated three times until the entire flange (4) surface was covered on both sides of a pair of membranes coupled together. Then, a similar method was used to apply a cladding to pipe top (3), around 30 degrees to each side on all pipes. Then, a pair of membranes was turned by 90 degrees and, when in a vertical position, cladding was applied to exposed top areas of all 5 pipes with the same parameters, and the process was run simultaneously on both sides of a pair of gas-tight membranes (2) coupled together. Then, membranes coupled together were turned by 180 degrees, and cladding was applied simultaneously to the remaining exposed pipe areas, one by one, using the same parameters. During the entire process, heaters located in between pipes and flanges kept a temperature of the membranes beyond the cladding zone at a level of around 300 °C. After process completion and membrane cooling, a pair of membranes coupled together was removed from a positioner and soaked in an oven to relieve stresses, with a temperature of 700°C maintained for 30 minutes. Finally, pipe ends welded together with the membranes were cut through, bolts connecting sections (angles) (7) welded onto the flanges were removed and sections (7) were cut off from the membranes. While uncoupling, membranes deformed slightly towards the surface covered with a protective cladding, thus achieving the shape making possible to fit them into a boiler.

## Claims

1. A method of applying a protective cladding, particularly to gas-tight membranes of energy boilers, **characterized in that** two gas-tight membranes (2) are coupled together, and then a resultant pair of gas-tight membranes (2) is soaked at 300°C to 800°C, favorably at around 700°C, wherein a surface of a gas-tight membrane where a protective cladding (1) will be applied is cleaned, mounted on a positioner (13) and then preheated to 80°C to 600°C, favorably to around 300°C-450°C, and then the cleaned and preheated surface of a pair of gas-tight membranes (2) coupled together is covered with a protective cladding (1), wherein a protective cladding is applied at a thickness of 0.1 mm to 3.00 mm, favorably around 0.6 mm, and then the entire pair of gas-tight membranes (2) coupled together with a cladding is finally soaked at 300°C to 800°C, favorably at around 700°C, and the set temperature is maintained for 10 minutes to 600 minutes, favorably for 15 minutes to 30 minutes, and then, gas-tight membranes (2) with a cladding are uncoupled.

2. A method according to claim 1 **characterized in that** gas-tight membranes (2) are coupled by welding metal sections (7) to their edges and/or flanges (4).

3. A method according to claim 1 **characterized in that** a surface of a gas-tight membrane (2) is cleaned by laser ablation, with a laser beam having an exit power from 100 kW to 600 kW, favorably 300 kW, a spot diameter from 0.1 mm to 1.0 mm, favorably around 0.5 mm and a scanning width of 30 mm to 80 mm, favorably around 60 mm, a laser pulse frequency of 10000 per second to 50000 per second, favorably around 20000 pulses per second.

4. A method according to claim 1 **characterized in that** initial soaking is performed by insertion of heaters (5) in between flanges (4) and pipes (3) of a gas-tight membrane (2).

5. A method according to claim 1 **characterized in that** initial soaking is performed by insertion of heaters (5) in between flanges (4) and pipes (3) of a gas-tight membrane (2) and/or inside pipes (3) of a gas-tight membrane (2).

6. A method according to claim 1 **characterized in that** a protective cladding (1) is applied to a gas-tight membrane (2) in the form powder or wire feedstock having the following composition: nickel from 50% to 80%, favorably around 66%, chromium from 8.0% to 50.0%, favorably around 20.0%, boron from 0.1% to 5.0%, favorably around 0.85%, silicon from 0.08% to 6.0%, favorably around 1.2%, manganese from 0.05% to 1.8%, favorably around 0.15%, molybdenum from 2.0% to 12.0%, favorably around 6.8%, niobium from 1.2% to 4.0%, favorably around 2.7%, iron from 0.01% to 4.0%, favorably around 1.8%, carbon from 0.03% to 0.9%, favorably around 0.25%.

7. A method according to claim 1 **characterized in that** a protective cladding (1) is applied to a gas-tight membrane (2) in the form powder or wire feedstock having the following composition: nickel from 50% to 80%, favorably around 64.0%, chromium from 8.0% to 50.0%, favorably around 22.0%, silicon from 0.08% to 1.0%, favorably around 0.25%, manganese from 0.05% to 2.0%, favorably around 0.20%, molybdenum from 2.0% to 15.0%, favorably around 9.0%, niobium from 2.0% to 5.0%, favorably around 3.6%, carbon from 0.01% to 0.5%, favorably around 0.03%, iron favorably below 1.0%.

8. A method according to claim 1 **characterized in that** a protective cladding (1) is applied to a gas-tight membrane (2) in the form powder or wire feedstock having the following composition: nickel from 60% to 80%, favorably around 70.4%, chromium from 8.0% to 20.0%, favorably around 17.3%, silicon from 2.0% to 7.0%, favorably around 4.0%, boron from 2.0% to 6.0%, favorably around 3.43%, carbon from 0.4% to 2.0%, favorably around 0.89%, iron from 2.5% to 7.0%, favorably around 4.0%.

9. A method according to claim 1 **characterized in that** laser beam radiation energy is used for application of a protective cladding (1) to a gas-tight membrane (2).

10. A method according to claim 1 **characterized in that** CMT technology is used for application of a protective cladding (1) to a gas tight membrane (2).

11. A method according to claims 1, 9 or 10 **characterized in that** parameters of a protective cladding (1) application are controlled using the information from a pyrometer or an infrared camera (11) in such a way that a cladding weld temperature while cladding application does not exceed 2600°C, and favorably amounts to 2300°C - 2500°C.

12. A method according to claims 1, 9, 10 or 11 **characterized in that** a protective cladding (1) application parameters are controlled in such a way that the area of a cladding process is supplied with energy in the amount of 2.5-12 kJ per 1 g of feedstock, favorably 4-6 kJ/g.

13. A method according to claims 1, 9, 10 or 11 **characterized in that** the energy amount supplied to a protective cladding (1) are is determined so as to have a heat penetration zone near the cladding weld below 2.0 mm, and favorably below 0.2 mm.

14. A method according to claim 1 **characterized in that** cladding is applied to a pair of gas-tight membranes (2) coupled together mounted on a positioner (13) alternately in such a way that one or several beads (9) are applied to one side of a pair of gas-tight membranes (2) coupled together, then this pair of gas-tight membranes (2) coupled together is turned, and one to several beads (9) are applied to another side of a pair of gas-tight membranes (2), wherein the cycle is repeated multiple times until the entire protective cladding (1) is applied as planned.

15. A method according to claims 1 or 13 **characterized in that** during a single cycle at least one bead (9) is applied over a length no lower than 0.4 of a gas tight membrane's (2) length to one side of a pair of gas-tight membranes coupled together; favorably 5%-10% of the planned surface of a cladding (1) is applied.

16. A method according to claim 1 **characterized in that** a protective cladding (1) is applied simultaneously to opposite sides of a pair of gas-tight membranes (2) coupled together.

17. A method according to claim 1 **characterized in that** a protective cladding (1) is applied in a weave pattern using CMT technique **characterized by** the following parameters: frequency of 1 Hz to 3 Hz, favorably 2 Hz, amount of cladding applied from 3.0 kg per hour to 6.0 kg per hour, favorably 4.3 kg per hour, weave amplitude from 10 mm to 12 mm.

18. A method according to claim 1 **characterized in that** for connection of gas tight membrane (2) flanges (4) by metal sections (7), continuous or stitch welding (6) is used.

19. A method according to claim 1 **characterized in that** initial and/or final soaking of a pair of gas-tight membranes (2) coupled together is performed in an oven or a preheated box.

20. A method according to claim 1 **characterized in that** gas-tight membranes (2) coupled together are initially deformed while coupling by insertion of spacers in between the membranes coupled together, said spacers having variable thicknesses from 2 mm to 200 mm.

21. A method according to claim 1 **characterized in that** pipe ends (3) of adjacent gas-tight membranes (3) are connected by welds (10).

22. A method according to claim 1 **characterized in that** edges of adjacent gas-tight membranes (2) are connected mechanically with bolts and/or sections (7).

23. A method according to claim 1 **characterized in that** a surface of a gas-tight membrane (2) is shot blasted up to Sa3, using corundum and/or shot of a fraction from 0.5 mm to 2.0 mm, favorably around 0.7 mm, and applying gas pressure from 2.5 bar to 12.0 bar, favorably around 7.0 bar.

24. A method according to claim 21 **characterized in that** a fixed distance between a cladding head (14) and a coupled pair of membranes (2) is maintained by a laser tracing system (12).

25. A method according to claim 1 **characterized in that** one end of a positioner (13) can move freely along the longitudinal axis of pipes (3).

## Patentansprüche

1. Die Ausführungsart der Schutzschicht, insbesondere auf den Dichtungsschirmen von den Energiekessel ist **dadurch** charakteristisch, dass zwei Dichtungsschirmen (2) sich in Paare verbinden, und dann so verbundenes Paar der Dichtungsschirme wird in der Temperatur von 300^{c}C bis 800°C günstig in ca. 700°C vorerhitzt, und danach wird die zur Bedeckung bestimmte Schutzschicht (1) und die Oberfläche der Dichtungsschirm (2) gereinigt, verbundenes Paar der Dichtungsschirmen (2) wird im Positionierer (13) befestigt und danach wird es zur Temperatur von 80°C bis 600°C günstig von ca. 300^{°}C-450^{°}C erhitzt, danach wird auf der gereinigten und erhitzten Oberfläche des verbundenen Paares der Dichtungsschirmen (2) die Schutzschicht (1) aufgetragen, wobei diese Schutzsicht wird im Umfang der Dichte von 0,1 mm bis 3,0 mm günstig ca. 0,2 mm aufgetragen, danach das ganze verbundene Paar der Schutzschirmen (2) mit der aufgetragenen Schutzschicht (1) wird anschließen im der Temperatur zwischen 300°C und 800°C günstig ca. 700°C erhitzt und es wird die Solltemperatur durch die Dauerzeit von 10 Minuten bis 600 Minuten günstig 15-30 Minuten erhalten, und zum Schluss des Prozesses werden die bedeckten Dichtungsschirmen (2) abgetrennt.

2. Die Methode nach Anspruch 1 ist **dadurch** charakteristisch, dass die Dichtungsschirmen (2) verbunden werden, durch Zusammenschweißen an ihre Rande und/oder Flossen (4) von Metallprofilen (7).

3. Die Methode nach Anspruch 1 ist **dadurch** charakteristisch, dass die Oberfläche der Dichtungsschirm (2) mit der Methode der Laserablation unter Verwendung der Laserstrahlen von der Ausgangsleistung bis 100 kW bis 600 kW günstig 300 kW, Durchmesser des Flecks von 0,1 mm bis 1,0 mm günstig ca. 0,5 mm und Breite des Scannen von 30 mm bis 80 mm günstig ca. 60 mm der Frequenz vom Laserimpuls von 10000 pro Sekunde bis 50000 pro Sekunde günstig ca. 20000 pro Sekunde.

4. Die Methode nach Anspruch 1 ist **dadurch** charakteristisch, dass die Vorerhitzung durch Hineinlegen des Tauchsieders (5) zwischen den Flossen (4) und Rohren (3) des Dichtungsschirms (2) durchgeführt wird.

5. Die Methode nach Anspruch 1 ist **dadurch** charakteristisch, dass die Vorerhitzung durch Hineinlegen des Tauchsieders (5) zwischen den Flossen (4) und Rohren (3) des Dichtungsschirms (2) und/oder in die Rohren (3) des Dichtungsschirms (2) durchgeführt wird.

6. Die Methode nach Anspruch 1 ist **dadurch** charakteristisch, dass zum Verschweißen der Schutzschicht (1) auf die Dichtungsschirm (2) das Material eingesetzt wird, das in der Form des Pulvers oder des Drahts von der Zusammensetzung: Nickel von 50% bis 80% günstig ca. 66%, Chrom von 8,0% bis 50,0% günstig ca. 20,0%, Bor von 0,1% bis 5,0% günstig ca. 0,85%, Silizium von 0,08% bis 6,0% günstig ca. 1,2%, Mangan von 0,05% bis 1,8% günstig ca. 0,15%, Molybdän von 2,0% bis 12,0% gu̅nstig 6,8%, Niob von 1,2% bis 4,0% günstig ca. 2,7%, Eisen von 0,01% bis 4,0%. gu̅nstig ca. 1,8% Kohlenstoff von 0,03% bis 0,9% günstig ca. 0,25%.

7. Die Methode nach Anspruch 1 ist **dadurch** charakteristisch, dass zum Verschweißen der Schutzschicht (1) auf die Dichtungsschirm (2) das Material eingesetzt wird, das in der Form des Pulvers oder des Drahtes von der Zusammensetzung: Nickel von 50,0% bis 80,0% gu̅nstig ca. 64,0%, Chrom von 8,0% bis 50,0% gu̅nstig ca. 22,0%, Silizium von 0,08% bis 1,0% günstig ca. 0,25%, Mangan von 0,05% bis 2,0%, günstig ca. 0,20%, Molybdän von 2,0% bis 15,0% günstig ca. 9,0%, Niob von 2.0% bis 5,0% günstig ca. 3,6 %, Kohlenstoff von 0,01% bis 0,5% günstig ca. 0,03 %, Eisen günstig unter 1,0%.

8. Die Methode nach Anspruch 1 ist **dadurch** charakteristisch, dass zum Verschweißen der Schutzschicht (1) auf die Dichtungsschirm (2) Material eingesetzt wird, das in Form des Pulvers oder des Drahtes von der Zusammensetzung angegeben wird: Nickel von 60,0% bis 80,0% günstig ca. 70,4%, Chrom von 8,0% bis 20,0 % bis günstig ca. 17,3%, Silizium von 2,0% bis 7,0% günstig ca. 4,0%, Bor von 2,0% bis 6,0% günstig ca. 3.43%, Kohlenstoff von 0,4% bis 2,0% günstig ca. 4,0%.

9. Die Methode nach Anspruch 1 ist **dadurch** charakteristisch, dass zum Verschweißen der Schutzschicht (1) auf Dichtungsschirm (2) Energie des Strahls von der Laserstrahlung eingesetzt wird.

10. Die Methode nach Anspruch 1 ist **dadurch** charakteristisch, dass zum Verschweißen der Schutzschicht (1) auf die Dichtungsschirm (2) die CMT-Technologie eingesetzt wird.

11. Die Methode nach Anspruch 1, 9, 10 ist **dadurch** charakteristisch, dass bei der Verwendung der Informationen aus dem Pyrometer oder dem thermographischen Kamera vom Verschweißen der Schutzschicht (1) auf solche Art und Weise gesteuert wird, damit die Temperatur der Schweißschicht den Wert von 2600°C beim Verschweißen nicht überschreiten, und günstig 2300°C -2500°C, betragen wird.

12. Methode nach Anspruch 1,9,10,1ist **dadurch** charakteristisch, dass die Parameter des Prozesses vom Aufschweißens der Schutzschicht (1) so kontrolliert werden, dass die Energie in der Menge von 2,5-12kJ/g des angegebenen Materials gu̅nstig 4-6 k T/g in den Bereich der Einführung des Prozesses des Aufschweißens geliefert wird.

13. Die Methode nach Anspruch 1, 9,10,11 ist **dadurch** charakteristisch, dass die Menge der in den Bereich der Führung vom Prozess des Aufschweißens der Schutzschicht (1) gelieferten Energie so festgestellt wird, dass die Zone des Einflusses von der Wärme im Boden im Bereich des Aufschweißens unter 2,0 mm günstig unter 0,2 mm betragen wird.

14. Die Methode nach Anspruch 1 ist **dadurch** charakteristisch, dass Aufschweißen auf dem verbundenen Paar der Dichtungsschirmen (2), das im Positionierer (13) montiert ist, abwechselnd auf solche Art und Weise, dass nach der Ausführung von einem oder mehreren Stichen (9) auf der einen Seite des verbundenen Paar von Dichtungsschirmen (2), dreht sich das Paar der verbundenen Dichtungsschirmen (2) und macht von einem bis zu mehreren Stichen (9) und auf der anderen Seite der Dichtungsschirmen (2), danach wiederholt sich der Zyklus bis zur Ausführung des Ganzen von Auftragen der Schutzschicht (1).

15. Die Methode nach Anspruch 1, 13 ist **dadurch** charakteristisch, dass in einem Zyklus auf der einen Seite des verbundenen Paares von verbundenen Dichtungsschirmen (2) wird mindestens ein Stich (9) auf der La̅nge nicht weniger als 0,4 von der Lange des Dichtungsschirms (2) und verschweißt günstig zwischen 5%-10% von der zur Ausführung aufgetragenen Oberfläche der Schutzschicht (1).

16. Die Methode nach Anspruch 1 ist **dadurch** charakteristisch, dass Verschweißen der Schutzschicht (1) in derselben Zeit nach den gegenübergestellten Seiten des verbundenen Paares der Dichtungsschirme (2) durchgeführt wird.

17. Die Methode nach Anspruch 1 ist **dadurch** charakteristisch, dass die Schutzschicht (1) schiefartig mithilfe der CMT-Technologie unter Anwendung der folgenden Parameter verschweißt wird: Frequenz von 1 Hz bis 3 Hz günstig 2 Hz, Menge des aufgetragenen Materials von 3,0 kg pro Stunde bis 6,0 kg pro Stunde günstig 4,3 kg pro Stunde: Amplitude der schiefen Winkel von 10 mm bis 12 mm.

18. Methode nach Anspruch 1 ist **dadurch** charakteristisch, dass die Verbindungen der Flossen (4) der Dichtungsschirmen (2) durch Vermittlung der Metallprofile (7) den kontinuierlichen oder unterbrochenen Schweißnaht (6) verwendet wird.

19. Die Methode nach Anspruch I ist **dadurch** charakteristisch, dass Vorerhitzung und/oder Endhitzung des verbundenen Paares von Dichtungsschirmen (2) im Ofen oder im erhitzten Behälter durchgeführt wird.

20. Die Methode nach Anspruch 1 ist **dadurch** charakteristisch, dass der in Paar verbundene Dichtungsschirm (2) bei der Vorverbindung sich deformiert, wenn es zwischen den verbundenen Schirmen die Trennwand von unterschiedlicher Dicke von 2-200 mm hineingelegt wird.

21. Die Methode nach Anspruch I ist **dadurch** charakteristisch, dass die Endungen der Rohren (3) von den neben gelegenen Dichtungsschirmen (2) mithilfe der Nähten (10) verbunden werden.

22. Die Methode nach Anspruch I ist **dadurch** charakteristisch, dass die Rande der anliegenden Dichtungsschirmen (2) sich mechanisch unter Anwendung der Schraube und/oder Profiile (7) verbindet.

23. Die Methode nach Anspruch I ist **dadurch** charakteristisch, dass die Oberfläche des Dichtungsschirmes (2) von dem Zustand von Sa3 mit der Strahlung- und Reibungsmethode des Korundes und/oder Schrots von der Krönung von 0,5 mm bis 2,0 mm günstig ca. 0,7 mm und bei der Anwendung des Gasdrucks bis 2,5 Bar bis 12,0 Bar günstig ca. 7,0 Bar.

24. Die Methode nach Anspruch 1 und 21 ist **dadurch** charakteristisch, dass die feste Entfernung des Kopfes von dem Aufschweißen (14) von dem verbundenen Paar der Schirme (2) mithilfe des Laserfolgesystems (12) erhalten wird.

25. Die Methode nach Anspruch 1 ist **dadurch** charakteristisch, dass ein Ende des Positionierer (13) sich locker in der länglichen Achse der Lage von Rohren (3) bewegen kann.

## Revendications

1. Le procédé de réalisation d'une couche de protection, particulièrement sur les écrans étanches des chaudières énergétiques, **caractérisée par le fait que** les deux écrans étanches (2) sont reliés en une paire, et ensuite une telle paire d'écrans étanches reliés (2) est imprégné initialement à une température entre 300 cm et 800 ° C, de préférence d'environ 700 ° C , où ensuite une couche de protection (1) destinée au revêtement de la surface d'écran étanche (2) est nettoyée. Un paire d'écrans étanches reliés (2) est fixée au positionneur (13), puis celle-ci est chauffée à une température de 80 ° C à 600 ° C, de préférence jusqu'à environ 300 ° C à 450 ° C. Ensuite, sur la surface de la paire intégrée d'écrans étanches (2) nettoyée et chauffée, on dépose une couche de protection (1), tandis que la couche de protection est appliquée dans la gamme d'épaisseur de 0,1 mm à 3.0. mm de préférence d'environ 0,6mm, puis la paire entière d'écrans étanches reliés (2) avec une couche de protection appliquée (1) est chauffée en phase terminale à une température entre 300 ° C et 800 ° C, de préférence d'environ 700 ° C , tout en maintenant une température donnée pendant une période de 10 minutes à 600 minutes, de préférence 15 à 30 minutes et à la fin du processus, les écrans étanches couverts sont séparés (2).

2. Le procédé, selon la revendication. 1, **caractérisé par le fait que** les écrans étanches sont (2) reliés par soudage des bords et/ou des stabilisateurs-ailettes avec des profilés métalliques.

3. Le procédé, selon la revendication. 1, **caractérisé par le fait que** la surface de l'écran étanche (2) est nettoyée par la méthode de l'ablation au laser en utilisant un faisceau laser d'une puissance de sortie de 100 kW à 600k W, préférence de 300 k W, diamètre de spot de 0,1 min à 1,0 mm, de préférence environ 0,5 mm et largeur de balayage de 30 mm à 80 mm, de préférence d'environ 60 mm, la fréquence de l'impulsion laser à partir de 10000 par seconde à 50000 par seconde, de préférence d'environ 20000 par seconde.

4. Le procédé, selon la revendication.1, **caractérisé par le fait que** le préchauffage est effectué en insérant le dispositif de chauffage (5) entre les ailettes (4) et les tubes (3) de l'écran étanche (2)

5. Le procédé, selon la revendication, **caractérisé par le fait que** le préchauffage est effectué en insérant le dispositif de chauffage (5) entre les ailettes (4) et les tube (3) de l'écran étanche (2) et /ou les tubes (3) de l'écran étanche (2)

6. Le procédé, selon la revendication 1, **caractérisé par le fait que** pour le rechargement par soudage de la couche de protection (1) sur l'écran étanche (2), on utilise un matériau qui est appliqué sous la forme d'une poudre ou d'un fil composé de: nickel, de 50% à 80%, de préférence environ 66% de chrome 8,0% à 50,0 %, de préférence à environ 20,0%, de bore de 0,1% à 5,0%, de préférence environ 0,85%, de silicium 0,08% à 6,0%, de préférence environ 1,2% de manganèse 0,05% à 1,8%, de préférence environ 0,15%, de molybdène entre 2,0% et 12,0%, de préférence d'environ 6,8%, de niobium de 1,2% à 4,0%, de préférence environ 2,7 % de fer, 0,01% à 4,0%, de préférence environ 1,8%, de carbone de 0,03% à 0,9%, de préférence d'environ 0,25%.

7. Le procédé, selon la revendication 1, **caractérisé par le fait que** pour le rechargement par soudage de la couche de protection (1) sur l'écran étanche (2), on utilise un matériau qui est appliqué sous la forme d'une poudre ou d'un fil composé de: nickel, de 50,0% à 80,0%, de préférence environ 64,0%, de chrome de 8,0% à 50,0%, de préférence environ 22,0%, de silicium 0,08% à 1,0%, de préférence environ 0,25 %, de manganèse de 0,05% à 2,0%, de préférence environ 0,20%, de molybdène entre 2,0% 15,0%, de préférence environ 9,0%, de niobium de 2,0% à 5,0%, de préférence environ 3,6% de carbone de 0,01% à 0,5%, de préférence environ 0,03%, de fer de préférence inférieure à 1,0%.

8. Le procédé, selon la revendication 1, **caractérisé par le fait que** pour le rechargement par soudage de la couche de protection (1) sur l'écran étanche (2), on utilise un matériau qui est appliqué sous la forme d'une poudre ou d'un fil composé de: composé de nickel de 60,0% à 80,0% de préférence d'environ 70,4% de chrome 8,0 à 20%, de préférence d'environ 17,3%, dde silicium de 2,0% à 7,0%, de préférence environ 4,0%, de bore de 2,0% à 6,0% de préférence environ 3,43% de carbone, 0,4% à 2,0%, de préférence d'environ 0,89%, de fer de 2,5% à 7,0%, de préférence environ 4,0%

9. Le procédé, selon la revendication 1, **caractérisé par le fait que** pour le rechargement par soudage de la couche de protection (1) sur l'écran étanche (2), on utilise de l'énergie du faisceau laser,

10. Le procédé, selon la revendication 1, **caractérisé par le fait que** pour le rechargement par soudage de la couche protectrice (1) sur l'écran étanche (2), on utilise la technologie CMT.

11. Le procédé, selon la revendication 1, 9, 10, **caractérisé par le fait qu'**en utilisant les informations provenant du pyromètreou d'une caméra infrarouge (11), on commande les paramètres du procédé du rechargement par soudage de la couche protectrice (1) de telle manière que la température au cours du dépôt lors le processus du rechargement par soudage ne dépasse pas 2600 ° C, de préférence soit de 2300 °C-2500°C

12. Le procédé, selon la revendication 1, 9, 10, 11 **caractérisé par le fait que** les paramètres du processus du rechargement par soudage de la couche protectrice (1) sont contrôlés de telle manière que dans la zone de la réalisation du processus de rechargement par soudage soit fournie de l'énergie d'une quantité de 2,5-12 kJ/g du matériau appliqué, de préférence de 4 à 6 kJ / g,

13. Le procédé, selon la revendication 1, 9,10, 11, **caractérisé par le fait que** la quantité d'énergie fournie dans la zone du rechargement par soudage de la couche de protection (1) est déterminé de cette manière que /paraphes/ la zone affectée par la chaleur dans la surface du dépôt de soudage soit inférieure à 2,0 mm, de préférence inférieure à 0,2 mm.

14. Le procédé, selon la revendication 1, **caractérisé par le fait que** le rechargement par soudage est effectué sur une paire intégrée d'écran étanches (2) monté dans le positionneur (13) en alternance de telle sorte qu'après la réalisation d'un ou plusieurs cordons de soudure (9) d'un côté de la paire intégrée d'écrans étanches (2), la paire intégrée d'écrans étanches soit tournée (2) et on effectue un ou plusieurs cordons de soudure (9) de l'autre côté de la paire d'écrans étanches (2), ensuite le cycle est répété jusqu'à la réalisation de la totalité de la couche de protection installée (1),

15. Le procédé, selon la revendication 1, 13 **caractérisé par le fait que** lors d'un cycle d'un côté de la paire intégrée d'écrans étanches (2), on réalise au moins un cordon de soudure (9) sur une longueur non inférieure à 0,4 de la longueur de l'écran étanche (2), de préférence en effectuant le rechargement par soudure entre 5% - 10% de la surface de la couche de protection prévue pour la réalisation. (1)

16. Le procédé, selon la revendication 1 **caractérisé par le fait que** le rechargement par soudure de la couche de protection (1) est réalisée en même temps sur les côtés opposés de la paire intégrée d'écrans étanches (2).

17. Le procédé, selon la revendication 1, **caractérisé par le fait que** la couche de protection (1) est rechargée par soudure à passe balancée, selon la technique CMT, en utilisant les paramètres suivants: la fréquence de 1 Hz à 3 Hz, de préférence 2 Hz, la quantité de matière appliquée par heure de 3,0 kg à 6,0 kg par heure, de préférence de 4,3 kg par heure, l'amplitude de passes balancées de 10 mm à 12 mm.

18. Le procédé, selon la revendication 1. **caractérisé par le fait que** pour relier les ailettes (4) des écrans étanches (2) moyennant des profilés métalliques (7), on utilise la soudure (6) continue et discontinue.

19. Le procédé, selon la revendication 1, **caractérisé par le fait que** le préchauffage et/ou le chauffage terminal de la paire intégrée d'écrans étanches (2), se réalise dans un four ou un récipient chauffé,

20. Le procédé, selon la revendication 1 **caractérisé par le fait que** les écrans étanches reliés en paires (2), au cours de la pré-fusion, sont déformés en insérant des entretoises entre les écrans reliés d'une différente épaisseur de 2- à 200mm.

21. Le procédé, selon la revendication 1, **caractérisé par le fait que** les extrémités de tubes (3) des écrans étanches adjacents (2), sont reliés par des soudures (10).

22. Le procédé, selon la revendication 1, **caractérisé par le fait que** les bords des écrans étanches adjacents (2) sont reliés mécaniquement moyennant des vis et / ou des profilés (7).

23. Le procédé, selon la revendication 1, **caractérisé par le fait que** la surface de l"écran étanche (2) est nettoyée par la méthode à flux abrasif jusqu'à l'état Sa3, en utilisant du cordon et/ou de la grenaille de 0,5 mm à 2,0 mm, de préférence d'environ 0,7 mm, et en utilisant une pression de gaz de 2,5 bars à 12,0 bar de préférence d'environ 7,0 bar.

24. Le procédé, selon la revendication 1 et 21, **caractérisé par le fait que** la tête de soudage (14) de la paire intégrée d'écrans reliés (2) est maintenue moyennant le système laser assis (12)

25. Le procédé, selon la revendication 1, **caractérisé par le fait qu'**un bout du positionneur (13) peut se déplacer librement dans l'axe longitudinal des tubes (3)
